# EUROPÄISCHE PATENTSCHRIFT

(11) **EP 3 292 067 B1**
(45) Veröffentlichungstag und Bekanntmachung des Hinweises auf die Patenterteilung: **14.08.2019**
(21) Anmeldenummer: 16716239.5
(22) Anmeldetag: 14.04.2016
(51) Int. Cl.: F16F 1/36, B66B 19/00, B66B 7/02, B66B 11/02

(54) **LAGER ZUM DÄMPFEN VON SCHWINGUNGEN IN FÜHRUNGSSCHIENEN EINER AUFZUGSANLAGE**
BEARING FOR DAMPING VIBRATIONS IN GUIDE RAILS OF AN ELEVATOR INSTALLATION
DISPOSITIF D'APPUI PERMETTANT D'AMORTIR DES VIBRATIONS DANS LES RAILS DE GUIDAGE D'UN SYSTÈME D'ASCENSEUR

(30) Priorität: 05.05.2015 DE 102015208288
(43) Veröffentlichungstag der Anmeldung: 14.03.2018
(73) Patentinhaber: thyssenkrupp Elevator AG, 45143 Essen (DE); thyssenkrupp AG, 45143 Essen (DE)
(72) Erfinder: KIRSCH, Michael, 73230 Kirchheim unter Teck (DE); HOFFMANN, Walter, 65527 Niedernhausen (DE); KUCZERA, Thomas, 70771 Leinfelden-Echterdingen (DE); GAINCHE, Philippe, 72663 Großbettlingen (DE); OBERT, Mike, 76593 Gernsbach (DE)
(74) Vertreter: thyssenkrupp Intellectual Property GmbH
(86) Internationale Anmeldenummer: PCT/EP2016/058248
(87) Internationale Veröffentlichungsnummer: WO 2016/177546

(56) Entgegenhaltungen:
- JP-A- 2002 338 168
- US-A- 3 767 148
- US-A1- 2002 070 081
- US-B1- 6 382 603

## Beschreibung

Dämpfende Lager werden in Aufzugsanlagen dazu verwendet, um Schwingungen, die vom Fahrkorb über Führungsschienen in das Gebäude geleitet werden, zu minimieren. Dämpfende Lager sind vor allem bei Verwendung eines Linearmotors als Antrieb von Fahrkörben in einer Aufzugsanlage von Vorteil, da bei diesem Aufzugstyp keine Seile vorhanden sind und daher alle Vertikalkräfte wie beispielsweise die Gewichtskraft der Kabine, die Antriebskraft der Kabine und Bremskräfte die auf die Kabine wirken von den Führungsschienen aufgenommen werden.

Um bei einem Einsatz von dämpfenden Lagern zur Reduzierung der Schwingungen einen leichten Fahrkorb zu gewährleisten, sollten vorzugsweise möglichst viele Bauteile schachtseitig in eine Aufzugsschienen-Befestigungseinrichtung integriert angebracht werden.

Derartige dämpfende Lager zur Reduzierung von Schwingungen sind aus der DE102010054157A1 und der EP2562120A1 bekannt. In beiden Varianten ist eine Isolatorschicht zwischen zwei Metallplatten, die jeweils eine glatte Oberfläche aufweisen, angeordnet. Die beiden Metallplatten und der sich dazwischen befindende Isolator werden in beiden Varianten durch mindestens eine Schraube, die beide Metallplatten und den dazwischen liegenden Isolator durchsetzt, miteinander verbunden. Die Dokumente US3767148A und JP2002338168A offenbaren den Oberbegriff von Anspruch 1.

In den aus dem Stand der Technik bekannten dämpfenden Lagern zur Reduzierung von Schwingungen in Aufzugsanlagen ist die Dicke des Isolators, der zwischen den beiden Metallplatten angeordnet ist, und damit der Abstand zwischen den beiden Metallplatten in orthogonaler Richtung zur Haupterstreckungsebene der Metallplatten gleichbleibend. Die Dämpfung der bekannten Lager zur Reduzierung von Schwingungen in Aufzugsanlagen kann dahingehend variiert werden, indem das Material und die Dicke des Isolators entsprechend gewählt wird. Die Variation der Dicke des Isolators hat den Nachteil, dass sich dadurch die Gesamtabmessung des Lagers entsprechend verändert.

Die in der Führungsschiene einer Aufzugsanlage auftretenden Schwingungen, rühren sowohl vom Antriebmotor als auch von der Fahrbewegung des Fahrkorbs her. Um die Schwingungen, die über die Führungsschiene in das Gebäude geleitet werden, zu minimieren und gleichzeitig einen hohen Fahrkomfort für die Fahrgäste zu gewähren, sollte das Lager in vertikaler Richtung (z-Richtung), also in Hauptausbreitungsrichtung des Aufzugschachts, eine starke Dämpfung aufweisen und gleichzeitig in horizontaler Ebene (x-y-Ebene) möglichst steif sein.

Damit eine solche Wirkung erzielt werden kann, müssten die geometrischen Ausmaße des aus dem Stand der Technik bekannten Lagers, angepasst werden. Je stärker die Dämpfung in vertikaler Richtung sein soll, desto größer muss die Erstreckung des Lagers in dieser Richtung sein. Damit das Lager in horizontaler Ebene eine hohe Steifigkeit aufweist, muss der Isolator zwischen den Metallplatten möglichst dünn sein. Bei Verwendung der bekannten Lager müssten je nach gewünschter Dämpfung die geometrischen Ausmaße des Lagers immer neu angepasst werden und damit auch der komplette Aufbau der Aufzugsanlage darauf abgestimmt werden.

Es ist Aufgabe der vorliegenden Erfindung eine Vorrichtung zur Dämpfung von Schwingungen in Aufzugsanlagen zu schaffen, die an die geforderte Dämpfung angepasst werden kann. Dabei soll das dämpfende Lager möglichst kompakt gebaut sein. Des Weiteren sollen die Dämpfungseigenschaften des Lagers variiert werden können, ohne dass sich die Außenmaße der Vorrichtung verändern.

Zur Lösung dieser Aufgabe zeichnet sich die Vorrichtung dadurch aus, dass zwei Metallplatten durch einen Isolator aus Elastomer beabstandet sind, wobei mindestens eine der beiden Metallplatten auf ihrer zum Isolator weisenden Innenseite eine Struktur aufweist, die durch eine Mehrzahl von Vorsprüngen gebildet wird. Diese Vorrichtung wird im Folgenden auch als Elastomerlager bezeichnet. In einer bevorzugten Ausführung weisen beide Metallplatten eine Struktur auf, wobei die Vorsprünge auf den zum Isolator weisenden Innenseiten der Metallplatten derart angeordnet sind, dass die Vorsprünge der beiden Metallplatten miteinander in Eingriff stehen.

Aufgrund der Elastizität des Isolators aus Elastomer, fügt sich dieser in die durch Vorsprünge der mindestens einen Metallplatte gebildeten Struktur ein. Der Isolator geht mit der mindestens einen Metallplatte eine formschlüssige Verbindung ein. Durch die formschlüssige Verbindung wird ein Verrutschen des Elastomers verhindert. Aufgrund der formschlüssigen Verbindung entspricht der Abstand zwischen den Vorsprüngen auf der mindestens einen Metallplatte der Dicke des Isolators zwischen den Vorsprüngen. Durch eine spezifische Anordnung der Vorsprünge und spezifische Abstände zwischen den Vorsprüngen auf der mindestens einen Metallplatte kann die Dicke des Isolators und damit die Dämpfungseigenschaft der Vorrichtung den Erfordernissen angepasst werden. Auf diese Weise kann die dämpfende Wirkung des Elastomers verändert werden, wobei die Gesamtausmaße des dämpfenden Lagers unverändert bleiben. Des Weiteren können die Vorsprünge verschiedene geometrische Formen und Ausmaße haben. So kann es sich bei den Vorsprüngen beispielsweise um Zähne handeln. Die durch die Vorsprünge gebildete Struktur kann aber auch linienförmig sein; d.h. die Struktur kann beispielsweise Balken, Wellen- oder Zick-Zack-Linien aufweisen. Auch ist eine Kombination verschieden geformter und verschieden großer Vorsprünge auf mindestens einer der beiden Metallplatten möglich. Auf diese Weise ergibt sich eine Vielzahl von Varianten, um die Dämpfung in eine oder mehrere Richtungen optimal anzupassen.

Die Abstände zwischen je zwei direkt zueinander benachbarten Vorsprüngen auf der zum Isolator weisenden Innenseite von mindestens einer der beiden Metallplatten können entweder immer denselben Betrag haben, oder sich zumindest zum Teil vom Betrag her voneinander unterscheiden. Bei einer Anordnung von gleichmäßig beabstandeten Vorsprüngen wird eine gleichmäßige Dämpfung erzielt. Werden die Vorsprünge so angeordnet, dass sich die Abstände zwischen je zwei direkt zueinander benachbarten Vorsprüngen zumindest zum Teil vom Betrag her voneinander unterscheiden, so kann bewirkt werden, dass die Vorrichtung partiell eine stärkere oder weniger starke Dämpfung aufweist.

Die beiden Metallplatten und der sich zwischen diesen befindende Isolator sind mittels Befestigungsmitteln mindestens einfach miteinander verbunden. Bei den dämpfenden Lagern, die aus dem Stand der Technik bekannt sind, durchsetzt ein Befestigungsmittel beide Metallplatten und den dazwischen befindenden Isolator. Dies hat jedoch zur Folge, dass Schwingungen von einer ersten zu der zweiten Metallplatte über das Befestigungsmittel direkt übertragen werden können. Um dies zu verhindern, wird in der vorliegenden Erfindung der Isolator mit Hilfe von Befestigungsmitteln an jeweils einer Metallplatte befestigt. Somit ist der Isolator mit beiden Metallplatten verbunden, jedoch besteht keine starre Verbindung zwischen den beiden Metallplatten. Die Metallplatten sind also nur indirekt über den Isolator miteinander über Befestigungsmittel verbunden. Dabei sind die Befestigungsmittel, die den Isolator mit einer ersten Metallplatte verbinden, gegenüber den Befestigungsmitteln, die den Isolator mit der zweiten Metallplatte verbinden, versetzt angeordnet. Es liegen sich also keine zwei Befestigungen direkt gegenüber.

Die nachfolgende Beschreibung einer vorteilhaften Ausführungsform der Erfindung dient im Zusammenhang mit der Zeichnung der näheren Erläuterung. Im Einzelnen zeigen:
Fig. 1: Teilabschnitt einer Führungsschiene mit einem an dieser angebrachten dämpfenden Lager
Fig. 2: Seitenansicht eines Ausführungsbeispiels eines elastischen Lagers in einer schematischen Darstellung
Fig. 3: Längsschnitt durch das in Figur 2 dargestellte dämpfende Lager
Fig. 4: Ausführungsbeispiel von ineinander greifenden Vorsprüngen zweier Metallplatten im Querschnitt

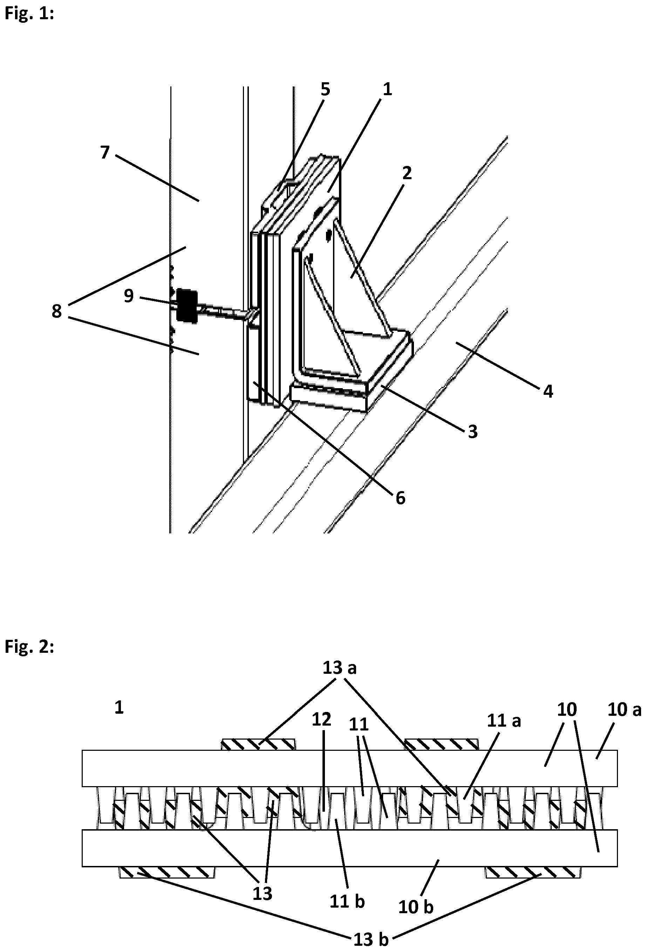

Figur 1 zeigt eine schematische Darstellung eines dämpfenden Elastomerlagers 1, welches zum einen über ein L-förmiges Befestigungselement 2 und ein Befestigungselement 3 an einer Wandhalterung 4 befestigt ist und zum anderen über die Befestigungselemente 5, 6 mit einer Führungsschiene 7 in Verbindung steht.

In der gezeigten Darstellung setzt sich die Führungsschiene aus mehreren Schienenelementen 8 zusammen, wobei jeweils zwei Schienenelemente mit einem Überganselement 9 verbunden sind. Die Befestigungselemente 5, 6 verbinden das dämpfende Elastomerlager 1 mit jeweils einem der beiden Schienenelemente 8.

Das Elastomerlager 1 umfasst zwei Metallplatten 10, welche durch ein sich dazwischen befindenden Elastomer 12 beabstandet sind. Durch die Befestigung eines dämpfenden Elastomerlagers 1 zwischen einer Führungsschiene 7 und einer Wandbefestigung 4 in einer Aufzugsanlage, werden Schwingungen, die im Fahrbetrieb entstehen und über die Führungsschiene 7 und die Wandbefestigung 4 in das Gebäude geleitet würden minimiert.

Figur 2 zeigt eine Seitenansicht einer Ausführungsform des dämpfenden Elastomerlagers 1. Das Elastomerlager 1 umfasst zwei Metallplatten 10, die jeweils auf ihrer zum Inneren des Lagers weisenden Innenseite eine Struktur aufweist, die durch eine Mehrzahl von Vorsprüngen 11 gebildet wird. Die Anordnung der Vorsprünge 11 ist derart gestaltet, dass die Vorsprünge 11a einer ersten Metallplatte 10a und die Vorsprünge 11b einer zweiten Metallplatte 10b miteinander in Eingriff stehen. Der sich zwischen den Metallplatten 10 befindende Isolator aus Elastomer 12 geht mit den Metallplatten 10 und deren Vorsprüngen 11 eine formschlüssige Verbindung ein.

In der dargestellten Ausführungsform handelt es sich bei den Vorsprüngen 11 der Metallplatten 10 um rechteckig geformte Zähne.

Das Lager wird mittels Befestigungsmittel 13 zusammengehalten. Die Metallplatten 10 sind dabei nicht direkt miteinander verbunden. Da über eine starre Verbindung der beiden Metallplatten 10 Schwingungen von der Führungsschiene 7 ohne Dämpfung an die Wandbefestigung 4 weitergeleitet würden, sind die Metallplatten 10 mit Einbeziehung des Isolators aus Elastomer 12 indirekt über Befestigungsmittel 13 miteinander verbunden. In der dargestellten Ausführungsform wird der Isolator aus Elastomer 12 und die Metallplatte 10a von Befestigungsmittel 13a durchsetzt und mittels dieser miteinander verbunden. Zum anderen werden der Isolator aus Elastomer 12 und die Metallplatte 10b von den Befestigungsmitteln 13b durchsetzt und damit miteinander verbunden. Die Befestigungsmittel 13a und 13b sind zueinander örtlich versetzt angeordnet. Auf diese Weise wird das dämpfende Elastomerlager 1 über die Befestigungsmittel 13 zusammengehalten, ohne dass Schwingungen ungedämpft über die Befestigungsmittel 13 weitergeleitet werden.

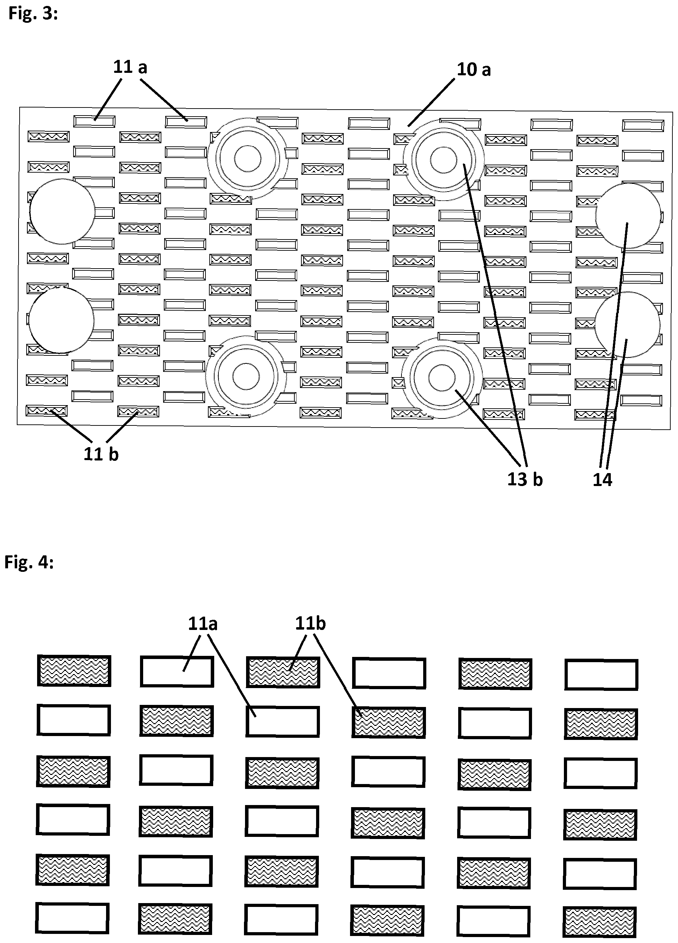

In Figur 3 ist ein Querschnitt durch Figur 2 dargestellt. In der gezeigten Ausführungsform sind die Vorsprünge 11a, 11b in Form von Zähnen auf den Metallplatten 10a, 10b in Reihen angeordnet, wobei die Reihen von Vorsprüngen 11a einer ersten Metallplatte 10a gegenüber den Reihen von Vorsprüngen 11b einer zweiten Metallplatte 10b versetzt angeordnet sind. In dem in Figur 3 dargestellten Querschnitt durch das Elastomerlager 1 sind die Vorsprünge 11a und 11b derart angeordnet, dass sich entlang der Haupterstreckungsrichtungen der Metallplatten 10a, 10b stets eine Reihe von Vorsprüngen 11a mit einer Reihe von Vorsprüngen 11b abwechselt und diagonal zu den Haupterstreckungsrichtungen sich stets ein Vorsprung 11a mit einem Vorsprung 11b abwechselt.

Im gezeigten Ausführungsbeispiel weisen die Metallplatten 10 Bohrungen 14 an den Stellen auf, an denen die Befestigungsmittel 13, die auch den Isolator aus Elastomer 12 durchsetzen, die Metallplatten 10 durchsetzen. Dabei durchsetzen die Befestigungsmittel 13a den Isolator aus Elastomer 12 und eine Metallplatte 10a, während die Befestigungsmittel 13b den Isolator aus Elastomer 12 und eine Metallplatte 10b durchsetzen.

Figur 4 zeigt ein weiteres Beispiel für eine mögliche Anordnung der in Eingriff stehenden Vorsprünge 11a und 11b, welche als Zähne ausgebildet sind. In den Haupterstreckungsrichtungen der Metallplatten 10 wechselt sich stets ein Vorsprung 11a mit einem Vorsprung 11b ab, während diagonal zu den Haupterstreckungsrichtungen sich Reihen die entweder nur aus Vorsprüngen 11a oder nur aus Vorsprüngen 11b gebildet werden abwechseln.

Die in Figur 3 und 4 dargestellten Vorsprünge 11 sind in Form von rechteckigen Zähnen ausgebildet. Die Zähne können aber auch andere geometrische Formen haben. Sowohl in Figur 3 als auch in Figur 4 sind die Zähne symmetrisch mit gleichbleibendem Abstand zueinander in Reihen auf den Metallplatten 10 angeordnet. Die Anordnung kann entsprechen der geforderten Dämpfungseigenschaft des Elastomerlagers 1 aber auch asymmetrisch sein und einen nicht-gleichbleibenden Abstand zwischen den Zähnen aufweisen. Die Vorsprünge 11 müssen nicht zwangsläufig die Form von Zähnen haben. Es sind auch Vorsprünge 11 in Form von Balken, Wellen- oder Zick-Zack-Linien denkbar.

**Bezugszeichenliste**

| | |
|---|---|
| dämpfendes Elastomerlager | **1** |
| L-förmiges Befestigungselement | **2** |
| Befestigungselement | **3** |
| Wandhalterung | **4** |
| Befestigungselement | **5** |
| Befestigungselement | **6** |
| Führungsschiene | **7** |
| Schienenelemente | **8** |
| Überganselement | **9** |
| Metallplatten | **10 a, b** |
| Vorsprünge | **11 a, b** |
| Isolator aus Elastomer | **12** |
| Befestigungsmittel | **13 a, b** |
| Bohrungen | **14** |

## Patentansprüche

1. Vorrichtung zur Dämpfung von Schwingungen in Aufzuganlagen, die zwei Metallplatten (10), welche durch einen Isolator aus Elastomer (12) beabstandet sind, umfasst,
wobei, mindestens eine der beiden Metallplatten (10) auf ihrer zum Isolator (12) weisenden Innenseite eine Struktur aufweist, die durch eine Mehrzahl von Vorsprüngen (11) gebildet wird **dadurch gekennzeichnet, dass**
der Isolator (12) mit Hilfe von Befestigungsmitteln (13) mindestens einfach an jeweils einer Metallplatte (10) befestigt ist, wobei die Befestigungsmittel (13a), die den Isolator (12) an einer ersten Metallplatte (10a) befestigen bezüglich der Haupterstreckungsebene des Isolators (12) gegenüber den Befestigungsmitteln (13b), die den Isolator an einer zweiten Metallplatte (10b) befestigen, versetzt angeordnet sind.

2. Vorrichtung nach Anspruch 1, **dadurch gekennzeichnet, dass** beide Metallplatten (10) auf ihrer zum Isolator (12) weisenden Innenseite eine Struktur, die durch eine Anordnung von einer Mehrzahl von Vorsprüngen (11) gebildet wird, aufweisen, wobei die Vorsprünge (11) derart angeordnet sind, dass die Vorsprünge (11) der beiden Metallplatten (10) miteinander in Eingriff stehen.

3. Vorrichtung nach einem der Ansprüche 1 bis 2, **dadurch gekennzeichnet, dass** sich der Isolator aus Elastomer (12) aufgrund seiner Elastizität derart in die durch die Vorsprünge (11) der mindestens einen Metallplatte (10) gebildeten Struktur einfügt, dass der Isolator (12) mit der mindestens einen Metallplatte (10) eine formschlüssige Verbindung eingeht.

4. Vorrichtung nach einem der Ansprüche 1 bis 3, **dadurch gekennzeichnet, dass** die Anordnung der Vorsprünge (11), die geometrischen Ausmaße und Formen der Vorsprünge (11) und die Abstände zwischen den Vorsprüngen (11) an die geforderte Dämpfung angepasst sind.

5. Vorrichtung nach einem der Ansprüche 1 bis 4, **dadurch gekennzeichnet, dass** die Abstände zwischen je zwei direkt zueinander benachbarten Vorsprüngen (11) auf der zum Isolator (12) weisenden Innenseite von mindestens einer der beiden Metallplatten (10) immer denselben Betrag haben.

6. Vorrichtung nach einem der Ansprüche 1 bis 4, **dadurch gekennzeichnet, dass** sich die Abstände zwischen direkt zueinander benachbarten, auf der zum Isolator (12) weisenden Innenseite der mindestens einen Metallplatte (10) angeordneten, Vorsprüngen (11) zumindest zum Teil vom Betrag her voneinander unterscheiden.

7. Vorrichtung nach einem der Ansprüche 1 bis 6, **dadurch gekennzeichnet, dass** die Vorsprünge (11) auf der zum Isolator (12) weisenden Innenseite von mindestens einer der beiden Metallplatten (10) linienförmig sind.

8. Vorrichtung nach einem der Ansprüche 1 bis 6, **dadurch gekennzeichnet, dass** die Vorsprünge (11) auf der zum Isolator (12) weisenden Innenseite von mindestens einer der beiden Metallplatten (10) in Form von Zähnen ausgebildet sind.

9. Vorrichtung nach Anspruch 8, **dadurch gekennzeichnet, dass** die auf der Innenseite von mindestens einer der beiden Metallplatten (10) als Zähne ausgebildeten Vorsprünge (11) in geradlinigen Reihen angeordnet sind.

## Claims

1. Device for damping vibrations in elevator installations, wherein the device comprises two metal plates (10) which are spaced apart from one another by an insulator made of an elastomer (12), wherein on its inner side facing the insulator (12) at least one of the two metal plates (10) has a structure which is formed by a plurality of projections (11), **characterized in that**
the insulator (12) is fastened at least once to one respective metal plate (10) by means of fastening means (13), wherein the fastening means (13a) which fasten the insulator (12) to a first metal plate (10a) are arranged offset relative to the main extension plane of the insulator (12) relative to the fastening means (13b) which fasten the insulator to the second metal plate (10b).

2. Device according to Claim 1, **characterized in that** both metal plates (10) on their inner side facing the insulator (12) have a structure which is formed by an arrangement of a plurality of projections (11), wherein the projections (11) are arranged such that the projections (11) of the two metal plates (10) are in engagement with one another.

3. Device according to one of Claims 1 to 2, **characterized in that** the insulator made of an elastomer (12), fits in the structure formed by the projections (11) of the at least one metal plate (10) due to the flexibility of the insulator made of an elastomer (12), such that the insulator (12) is in a positive connection with the at least one metal plate (10).

4. Device according to one of Claims 1 to 3, **characterized in that** the arrangement of the projections (11), the geometric sizes and shapes of the projections (11) and the spacings between the projections (11) are adapted to the required level of damping.

5. Device according to one of Claims 1 to 4, **characterized in that** the spacings between two respective projections (11) which are directly adjacent to one another on the inner side of at least one of the two metal plates (10) facing the insulator (12) are always of the same size.

6. Device according to one of Claims 1 to 4, **characterized in that** the spacings between projections (11) which are directly adjacent to one another and which are arranged on the inner side of the at least one metal plate (10) facing the insulator (12) differ from one another at least partially in size.

7. Device according to one of Claims 1 to 6, **characterized in that** the projections (11) on the inner side of at least one of the two metal plates (10) facing the insulator (12) are in a line shape.

8. Device according to one of Claims 1 to 6, **characterized in that** the projections (11) on the inner side of at least one of the two metal plates (10) facing the insulator (12) are tooth-like.

9. Device according to Claim 8, **characterized in that** the tooth-like projections (11) on the inner side of at least one of the two metal plates (10) are arranged in straight rows.

## Revendications

1. Dispositif pour amortir des vibrations dans des systèmes d'ascenseurs, qui comprend deux plaques de métal (10), qui sont espacées l'une de l'autre par un isolateur en élastomère (12), dans lequel au moins une des deux plaques de métal (10) présente sur son côté intérieur tourné vers l'isolateur (12) une structure qui est formée par une multiplicité de protubérances (11), **caractérisé en ce que** l'isolateur (12) est fixé au moins simplement chaque fois à une plaque de métal (10) à l'aide de moyens de fixation (13), dans lequel les moyens de fixation (13a), qui fixent l'isolateur (12) à une première plaque de métal (10a) par rapport au plan d'extension principal de l'isolateur (12) sont disposés de façon décalée par rapport aux moyens de fixation (13b), qui fixent l'isolateur à une deuxième plaque de métal (10b).

2. Dispositif selon la revendication 1, **caractérisé en ce que** les deux plaques de métal (10) présentent sur leur côté intérieur tourné vers l'isolateur (12) une structure qui est formée par une disposition d'une multiplicité de protubérances (11), dans lequel les protubérances (11) sont disposées de telle manière que les protubérances (11) des deux plaques de métal (10) soient en prise les unes dans les autres.

3. Dispositif selon une des revendications 1 à 2, **caractérisé en ce que** l'isolateur en élastomère (12) s'insère en raison de son élasticité dans la structure formée par les protubérances (11) de ladite au moins une plaque de métal (10), de telle manière que l'isolateur (12) forme un assemblage par emboîtement avec ladite au moins une plaque de métal (10).

4. Dispositif selon l'une quelconque des revendications 1 à 3, **caractérisé en ce que** la disposition des protubérances (11), les dimensions et les formes géométriques des protubérances (11) et les distances entre les protubérances (11) sont adaptées à l'amortissement requis.

5. Dispositif selon l'une quelconque des revendications 1 à 4, **caractérisé en ce que** les distances entre deux protubérances (11) directement voisines l'une de l'autre sur le côté intérieur tourné vers l'isolateur (12) d'au moins une des deux plaques de métal (10) ont toujours la même valeur.

6. Dispositif selon l'une quelconque des revendications 1 à 4, **caractérisé en ce que** les distances entre des protubérances (11) directement voisines l'une de l'autre, disposées sur le côté intérieur tourné vers l'isolateur (12) de ladite au moins une plaque de métal (10) diffèrent de valeur l'une de l'autre, au moins pour une partie.

7. Dispositif selon l'une quelconque des revendications 1 à 6, **caractérisé en ce que** les protubérances (11) sur le côté intérieur tourné vers l'isolateur (12) d'au moins une des deux plaques de métal (10) sont en forme de lignes.

8. Dispositif selon l'une quelconque des revendications 1 à 6, **caractérisé en ce que** les protubérances (11) sur le côté intérieur tourné vers l'isolateur (12) d'au moins une des deux plaques de métal (10) sont réalisées en forme de dents.

9. Dispositif selon la revendication 8, **caractérisé en ce que** les protubérances (11) réalisées en forme de dents sur le côté intérieur d'au moins une des deux plaques de métal (10) sont disposées en rangées rectilignes.
